# EUROPEAN PATENT SPECIFICATION

(11) **EP 0 987 592 B1**
(45) Date of publication and mention of the grant of the patent: **08.12.2004**
(21) Application number: 98203076.9
(22) Date of filing: 14.09.1998
(51) Int. Cl.: G03B 42/04

(54) **Relockable film cartridge for a photographic system**
Wiederverschliessbare Filmbehälter für ein Photographisches System
Cassette de film refermable pour un système photographique

(43) Date of publication of application: 22.03.2000
(73) Proprietor: AGFA-GEVAERT, 2640 Mortsel (BE)
(72) Inventor: Van Keilegom, Roland, c/o Agfa-Gevaert N.V., 2640 Mortsel (BE); Peeters, Dirk, c/o Agfa-Gevaert N.V., 2640 Mortsel (BE); Mostmans, Jozef, c/o Agfa-Gevaert N.V., 2640 Mortsel (BE)

(56) References cited:
- EP-A- 0 301 238
- WO-A-92/15043
- DE-A- 3 426 260

## Description

### FIELD OF THE INVENTION

The present invention relates to a solution for a method for packaging photographic films.
More specifically the invention is related to a relockable casette or cartridge for medical imaging film.

### BACKGROUND OF THE INVENTION

X-ray and other types of medical imaging photographic film are typically packaged in optically opaque (i.e. light-tight)and photo-inert containers such as cassettes, magazines, cartridges and bags. The film must be removed from these packages and loaded into the x-ray machine, camera or other imaging device under darkroom conditions, an inconvenient procedure.

**US-A-1 098 844** discloses a film package which can be loaded directly into a camera, thereby alleviating the need for a darkroom. However this package is relatively inefficient in design and requires manual manipulation to bring the film into exposure position. Said package is therefore incompatible with the automatic film handling mechanism of modern imaging systems.

**US-A-4 727 391** discloses a package for sheet film and a loading device for the package. The package includes a tray and a flexible cover peelably attached to the tray by an adhesive. After the package is loaded into a loading device of an image recorder, the cover is peeled off, enabling a delivery equipment to access the film. The adhesive layer has an edge portion inclined to the longitudinal direction of the tray so the cover can be peeled off easily.

Packages of the type shown in said patent contain many sheets of one specific type of film. However, depending on the nature of the image being exposed, it is often necessary to load different sizes and/or types of film into the photographic system. Any unexposed film remaining within a cartridge is therefore wasted if the cartridge must be removed from the photographic system so a new cartridge bearing a different type or size of film can be inserted.

**EP-A-0 301 238** discloses a light-tight cartridge for a roll of photographic material, the cartridge having a magnetic seal along its elongated opening.

**PCT/EP88/00166**, i.e WO 88 06750 A discloses an automatic film loading device for sheet film cassettes. After a cassette is inserted into an unloading and reloading station in the device, the cassette is opened and the exposed sheet of film is seized, removed and transported to a developing apparatus. The cassette is then reloaded with a sheet of film from one of a plurality of supply magazines, each containing different sizes of film. The freshly loaded cartridge is then dispensed from the device for subsequent use. Although this automatic film loading device reduces the waste associated with the removal of unused film from an photographic system, it is a complicated and relatively expensive accessory for the photographic system

**PCT/US92/00890**, i.e. **WO 92 15043 A**, discloses a resealable cartridge for photosensitive media, comprising: (a) photo-inert and optically opaque media-receiving tray having a media access opening; (b) flexible, photo-inert and optically opaque cover for the media access opening; and (c)photo-inert and optically opaque seal between the tray and the cover, the seal including an openable and resealable adhesive seal between at least portions of the cover and tray.

It is evident that there is a continuing need for improved film handling systems for photographic photographic systems. In particular, there is a need for a device which conveniently enables different sizes and/or types of film to be inserted into and removed from a medical photographic system without resulting waste. The device must be relatively inexpensive to be commercially viable.

### OBJECTS OF THE INVENTION

It is an object of the present invention to provide a material for a relockable cartridge for photosensitive material, which permits the use of different sizes and/or kinds of photographic film in an photographic system without waste.

Further objects of the present invention will be clear from the description hereafter.

### SUMMARY OF THE INVENTION

According to the invention there is provided a relockable cartridge for photosensitive media as defined in claim 1.

### BRIEF DESCRIPTION OF THE DRAWINGS

**FIG. 1** shows a photographic system configured for use with a relockable film cartridge of the present invention.
**FIG. 2** is a top view of a relockable film cartridge in accordance with the present invention, with a portion of the cover broken away.
**FIG. 3** is a side view of the cartridge shown in FIG. 2.

### DETAILED DESCRIPTION OF THE INVENTION

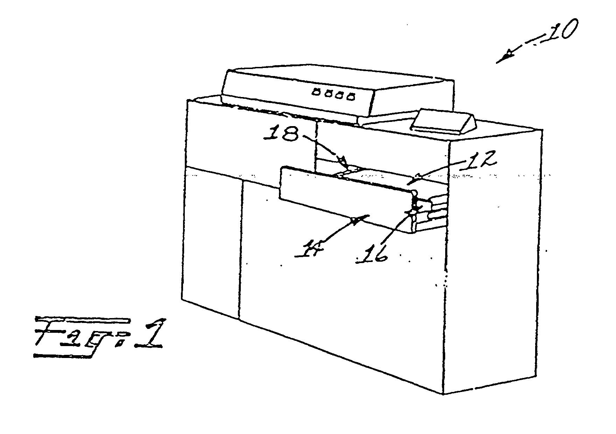

FIG. 1 is an illustration of a photographic system 10 which is configured to operate with a relockable photographic film cartridge in accordance with the present invention. In the embodiment shown, photographic system 10 includes a drawer 14 which is opened to provide access to a cartridge-receiving base 16 into which film cartridge 12 is loaded. A cartridge opening/closing mechanism 18 is also mounted to drawer 14. After a film cartridge 12 has been loaded into base 16, drawer 14 is closed to lock the cartridge within a light-tight compartiment. Opening/closing mechanism 18 then opens cartridge 12 to permit access to sheets of film (not visible in FIG. 1) in the cartridge. Sheets of film are removed from the opened cartridge 12 and imaged by other subsystems (not shown) of photographic system 10. The imaged film is temporary stored in a magazine (not shown) before being removed from photographic system 10 for subsequent processing. Alternatively, the imaged film can be automatically fed to a docked or attached film developer (not shown) for processing.

Opening/closing mechanism 18 is also actuated to close cartridge 12 before the cartridge can be removed from photographic system 10. Since cartridge 12 is relockable, it can be removed from photographic system 10 before all the film within the cartridge has been exposed. Cartridges 12 with different sizes or types of film media can therefore be conveniently loaded into and removed from photographic system 10 as needed, without wasting any unused film remaining in the cartridge.

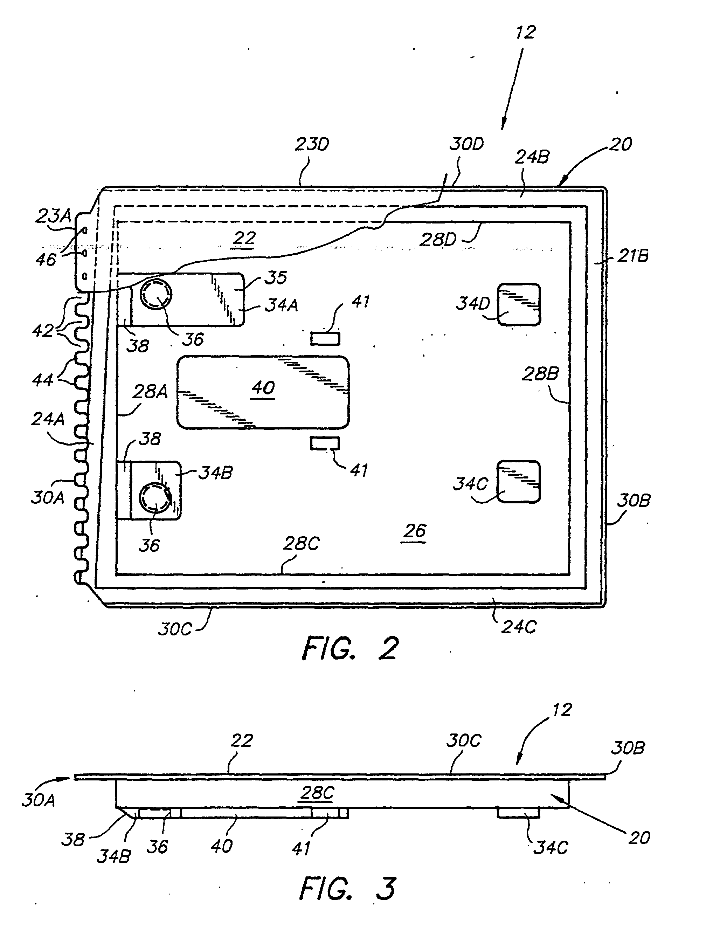

Relockable cartridge 12 can be described in greater detail with reference to FIGS. 2 and 3. As shown, cartridge 12 includes an optically opaque polymer film-receiving tray 20 and a flexible, optically opaque cover 22. Cover 22 is relockable attached to tray 20 by magnetic sealing strips or segments. Tray 20 is preferably molded in one piece from a relatively inexpensive and photo-inert polyolefin material so that it is economically feasible to dispose of the cartridge following a single use. In one embodiment tray 20 is molded from 555-ABS material which is commercially available from the Dow Chemical Company. Polystyrene materials having appropriate characteristics can also be used.

Tray 20 is a relatively shallow member and includes a generally planar bottom wall 26, front wall 28A, rear wall 28B and side walls 28C and D. Lips 30A-30D extend outwardly from the upper edges of respective walls 28A-28D, and circumscribe a film access opening of tray 20. Inwardly projecting guides are formed on walls 28A-28D to properly position sheets of film (not shown) within tray 20. Feet 34A-34D are formed into and extend downwardly from bottom wall 26 to support cartridge 12 within base 16 of photographic system 10. Bottom wall 26 also includes positioning recesses 36 which can tapered. Positioning recesses 36 are configured to receive positioning lugs extending from base 16. The position lugs secure and properly orient cartridge 12 within photographic system 10. In the embodiment shown, position recesses 36 are molded into feet 34A and 34B adjacent to front wall 28A. A media presence monitoring well 35 is also formed in bottom wall 26. Media presence monitoring sensors of photographic system 10 (not shown) extend into well 35 below the surface of bottom wall 26 when all film has been removed from tray 20.

Feet 34A and 34B (i.e. those adjacent to front wall 28A) also includes ramp surfaces 38 which slope downwardly from the lower edge of the front wall to the bottom of the feet. Ramp surface 38 guide feet 34A and 34B over the position lugs in photographic system base 16 as cartridge 12 is being loaded into the base. The embodiment of tray 20 illustrated in FIGS 2 and 3 also includes a recess 40 in bottom wall 26 which forms a platform on the bottom exterior of tray 20. The platform formed by recess 40 is configured to receive an information bearing medium such as a bar code which includes recorded information pertaining to the characteristics of film within cartridge 12. A pair of feet 41 are formed as recesses in bottom wall 26 adjacent recess 40 to insure proper positioning of the information bearing medium with respect to a reading device (not shown) of photographic system 10. Reinforcing ribs (not shown in FIGS 2 and 3) can also be molded into bottom wall 26 and/or side walls 28A-28D to increase the rigidity of tray 20.

The forwardmost or leading edge of front lip 30A also includes a series of evenly spaced cut-out sections 42. Cut-out sections 42 form a series of spaced projections 44 on the leading edge of lip 30A. Cut-out sections 42 and projections 44 cooperate with yet to be described aspects of cover 22 and opening/closing mechanism 18 to facilitate the opening and subsequent closing of cartridge 12.

Cover 22 is a flexible, photo-inert, optically opaque sheet sized to extent over the access opening of tray 20. Cover 22 has edges 23A-23D (only edges 23A and 23D are shown in FIG. 2) which extend between and mate with tray lips 30A-30D, respectively. In one embodiment, cover 22 is a foil formed by a foil laminate formed by polyethylene bonded layers of one 25µm thick polyethylene, 8.75 µm thick aluminium foil and 50 µm thick polypropylene. This foil laminate cover 22 is of a sufficiently stretchy nature to prevent the cover from popping off tray 20 when cartridge 12 is flexed, yet rigid enough to prevent detrimental amounts of stretch related buckling when the cover is rolled up. The foil laminate cover 22 also provides for the integrity of a vacuum within cartridge 12.

In another embodiment, cover 22 is a magnetic foil

A paper or polyester reinforcing strip (not separately shown) can be added to the leading or front edge 23A of cover 22 to increase cover rigidity above projections 44 and facilitate the operation of opening/closing mechanism 18. In one embodiment , the reinforcing strip is a 6 mm wide, 150 µm thick, strip of mylar. The front edge 23A of cover 22 extends over the tray cut-out sections 42, and includes elongated apertures 46 which are positioned over the cut-out sections when the cover is sealed onto tray 20. Apertures 46 facilitate the engagement of opening/closing mechanism 18 with cover 22.

In one embodiment magnetic segments or strips can be applied on at least a part of the forward lip 30A and optionally on projecting guide. Preferably said magnetic strips or segments are applied on at least a part of the forward and side lips 30 and/or on the forward lip 30A and on the top of the side forwardly projecting guides. More preferably said magnetic strips or segments are applied to the whole forward lip 30A and on optionally projecting guide. Most preferably said magnetic strips or segments are applied to the whole forward lip 30A and optionally to projecting guide and to a part of the side lips 30 and/or projecting guides adjacent to the forward lip 30A or projecting guide. Said magnetic strips or segments are preferably between 0.5 and 30 mm thick, more preferably between 1 and 5 mm thick. The cover then contains iron powder or comprises on the leading edges a metallic strip. Said metallic strips are preferably between 10 µm and 500 µm thick, more preferably between 25 and 100 µm thick

In another embodiment metallic strips or segments can be applied on at least a part of the forward lip 30A and optionally on projecting guide. Preferably said metallic strips are applied on at least a part of the forward and side lips 30 and/or on the forward lip 30A and on the top of the side forwardly projecting guides. More preferably said metallic strips are applied to the whole forward lip 30A and optionally projecting guide. Most preferably said metallic strips are applied to the whole forward lip 30A and optionally to projecting guide and to a part of the side lips 30 and/or projecting guides adjacent to the forward lip 30A or projecting guide.

Said metallic strip is preferably between 0.5 and 10 mm thick, more preferably between 1 and 5 mm thick
The cover is then made of a magnetic foil. Said foil has a thickness preferably between 0.2 and 2 mm, more preferably between 0.5 and 1 mm.

## Claims

1. A relockable cartridge (12) for storing and allowing dispensing sheets of photosensitive media, the cartridge comprising (a) a photo-inert and optically opaque media-receiving tray (20) having a media access opening; and (b) a flexible, rollable, photo-inert and optically opaque cover (22) for the media access opening; the cartridge including an openable and relockable seal between at least portions of the cover and tray, wherein one part of the seal is located on upperlips (30A-30D) or projective guides of said tray; **characterized in that** said seal is a magnetic seal and **in that** another part of the magnetic seal consists of or is fixed to said cover.

2. A cartridge according to claim 1 wherein magnetic segments or strips are applied on at least a part of a forward lip (30A) of said tray and optionally on a projecting guide of said tray and wherein said cover contains iron powder, or comprises on a leading edge a metallic strip, or is made of a magnetic foil.

3. A cartridge according to claim 1 or 2 wherein said magnetic strips or segments have a thickness between 0.5 and 30 mm.

## Patentansprüche

1. Eine wiederverschließbare Kassette (12) zum Lagern und Spenden von Bogen von strahlungsempfindlichen Medien, wobei die Kassette
(a) eine gegenüber Strahlung inerte und optisch undurchsichtige Schale (20) zur Aufnahme von Medien mit einer Zugangsöffnung für die Medien und (b) eine biegsame, aufrollbare, gegenüber Strahlung inerte und optisch undurchsichtige Abdeckung (22) für die Zugangsöffnung für die Medien umfasst, wobei die Kassette wenigstens zwischen Teilen der Abdeckung und der Schale eine zu öffnende und wiederverschließbare Dichtung umfasst-und ein Teil der Dichtung auf Unterlippen (30A-30D) oder ausragenden Führungsmitteln der Schale vorliegt, **dadurch gekennzeichnet, dass** die Dichtung eine magnetische Dichtung ist und ein anderer Teilder magnetischen Dichtung die Abdeckung ist oder an der Abdeckung befestigt ist.

2. Kassette nach Anspruch 1, **dadurch gekennzeichnet, dass** auf zumindest einen Teil einer Vorderlippe (30A) der Schale und wahlweise auf ein ausragendes Führungsmittel der Schale magnetische Segmente oder Streifen angebracht sind und die Abdeckung Eisenpulver enthält oder auf einem Vorderrand einen Metallstreifen umfasst oder aus einer magnetischen Folie besteht.

3. Kassette nach Anspruch 1 oder 2, **dadurch gekennzeichnet, dass** die magnetischen Streifen oder Segmente eine Stärke zwischen 0,5 und 30 mm aufweisen.

## Revendications

1. Cartouche (12) apte à être reverrouillée pour l'entreposage et pour permettre la distribution de feuilles de milieux photosensibles, la cartouche comprenant (a) un magasin (20) inerte du point de vue photographique et opaque du point de vue optique, pour la réception de milieux, possédant une ouverture d'accès aux milieux ; et (b) un couvercle (22) flexible, qui peut être enroulé, inerte du point de vue photographique et opaque du point de vue optique, pour ouverture d'accès aux milieux ; la cartouche englobant un joint d'étanchéité qui peut être ouvert et qui peut être reverrouillé entre au moins des portions du couvercle et du magasin, une partie du joint d'étanchéité étant disposée sur des lèvres supérieures (30A-30D) ou sur des guides saillants dudit magasin ; **caractérisée en ce que** ledit joint d'étanchéité est un joint d'étanchéité magnétique est **en ce que** d'autre partie du joint d'étanchéité magnétique est constituée dudit couvercle ou est fixée audit couvercle.

2. Cartouche selon la revendication 1, dans laquelle des segments ou des bandes magnétiques sont appliqués sur au moins une partie d'une lèvre antérieure (30A) dudit magasin, le cas échéant sur un guide saillant dudit magasin et dans lequel ledit couvercle contient de la poudre de fer ou comprend, sur un bord antérieur, une bande métallique, ou encore est réalisé sous la forme d'une mince feuille magnétique.

3. Cartouche selon la revendication 1 ou 2, dans laquelle lesdites bandes ou lesdits segments magnétiques possèdent une épaisseur entre 0,5 et 30 mm.
